# EUROPÄISCHE PATENTSCHRIFT

(11) **EP 1 388 626 B1**
(45) Veröffentlichungstag und Bekanntmachung des Hinweises auf die Patenterteilung: **18.05.2005**
(21) Anmeldenummer: 03017832.1
(22) Anmeldetag: 05.08.2003
(51) Int. Cl.: E05B 1/00

(54) **Halter**
Support
Support

(30) Priorität: 09.08.2002 DE 20212295 U
(43) Veröffentlichungstag der Anmeldung: 11.02.2004
(73) Patentinhaber: Horst Filipp GmbH, 32130 Enger-Oldinghausen (DE)
(72) Erfinder: Filipp, Horst, 33790 Halle (DE)
(74) Vertreter: Dantz, Jan Henning

(56) Entgegenhaltungen:
- EP-A- 0 563 568
- GB-A- 1 286 625
- GB-A- 2 321 186

## Beschreibung

Die vorliegende Erfindung betrifft einen Halter gemäß dem Oberbegriff des Anspruches 1.

Derartige Halter finden beispielsweise Verwendung als Griffe für Türen, wobei üblicherweise zwei Anschlusssockel vorgesehen sind, mit denen der Halter am Türblatt befestigt wird. Die Anschlusssockel verlaufen dabei parallel und mit Abstand zueinander und sind rechtwinklig an der Haltestange befestigt.

Die Stirnseite, mit der jeder Anschlusssockel an der Haltestange anliegt, ist an deren Kontur angepasst, so dass ein sauberer Anschluss gebildet ist.

Die Haltestange besteht aus einem vorzugsweise Rundrohr oder aus einem runden Vollmaterial, das endseitig Hohlräume aufweist, in die von außen her ein Gegenstück einführbar ist, das mit einer quer verlaufenden Gewindebohrung versehen ist, in die eine durch ein Zwischenstück des Anschlusssockels geführte Schraube eingedreht ist, mit der das Gegenstück an die Innenwandung der Haltestange angepresst wird.

Der Anschlusssockel besteht somit aus zwei Teilen, und zwar dem Zwischenstück und einem damit verbundenen weiteren Sockelteil, das mit beispielsweise dem Türblatt verbindbar ist.

Die Befestigung des zusätzlichen Sockelteiles am Zwischenstück erfolgt hierbei üblicherweise durch Verkleben, wozu das Zwischenstück einen entsprechenden Ansatz aufweist, auf den das Sockelteil aufgeschoben ist und der die Klebfläche bildet.

Diese Konstruktion findet dann Verwendung, wenn der Anschlusssockel als Rohr ausgebildet ist, in dessen der Haltestange gegenüberliegendem Endbereich ein Dübel platziert ist, mit dem der Halter am Türblatt oder einem weiteren auf der anderen Seite des Türblattes angeordneten Halter verbindbar ist.

In dem Fall, der Anschlusssockel besteht aus Vollmaterial, erfolgt eine Verschraubung mit dem Gegenstück mittels einer Schraube, die durch eine sich über die gesamte Länge des Anschlusssockels erfolgende Längsbohrung geführt ist.

In jedem Fall der bekannten Konstruktionen (siehe z.B. Dokument EP-A-0 563 562) ist die Realisierung der Verbindung zwischen dem Anschlusssockel und der Haltestange nur mit erheblichem Fertigungsaufwand möglich, wobei bei Verwendung eines Zwischenstücks dieses als separates Teil hergestellt werden muss, was naturgemäß zu relativ hohen Fertigungskosten führt.

Durch die unlösbare Verbindung des Sockelteiles mit dem Zwischenstück durch das genannte Verkleben ist eine möglicherweise notwendige Demontage nur durch Zerstörung der Klebverbindung und einer damit einhergehenden Beschädigung der Oberfläche des Zwischenstücks bzw. des Sockelteiles möglich, so dass eine Wiederverwendung nur mit Austausch der entsprechenden Teile möglich ist.

Darüber hinaus stellt die zweiteilige Ausbildung des Anschlusssockels eine in gestalterischer Hinsicht eher unbefriedigende Lösung dar, da die Nahtstelle zwischen dem Zwischenstück und dem Sockelteil als eher störend empfunden wird.

Der vorliegenden Erfindung liegt daher die Aufgabe zugrunde, einen Halter der gattungsgemäßen Art so weiter zu entwickeln, dass er einfacher herstell-, montier- und demontierbar ist.

Diese Aufgabe wird durch einen Halter gelöst, der die Merkmale des Anspruches 1 aufweist.

Durch diese konstruktive Ausbildung eines Halters besteht nun die Möglichkeit, einfach und kostengünstig eine Verbindung zwischen dem Anschlusssockel und der Haltestange herzustellen.

So unterscheidet sich die Verbindung eines rohrförmigen Anschlusssockels, wie er beispielsweise dann eingesetzt wird, wenn er als Krümmer ausgebildet ist, nicht von einer solchen, bei der der Anschlusssockel aus einen Vollmaterial besteht.

Im ersten Fall wird in den Anschlusssockel ein Dübel eingeführt, in den unter Aufspreizung die durch das Druckstück und die Wandung der Haltestange geführte Schraube eingedreht ist.

Bei Einsatz von Vollmaterial als Anschlusssockel hingegen ist in diesem eine, ausgehend von der der Haltestange zugewandten Stirnseite sich in Längsachsrichtung erstreckende Gewindebohrung vorgesehen, in die die Schraube eingedreht ist.

Die Schraube selbst kann relativ kurz gehalten sei, so dass sie problemlos in das Innere der Haltestange führbar ist, bis in den Verbindungsbereich. In jedem Fall muss die Schraube so kurz sein, dass ausreichend Platz für die Benutzung eines Schraubwerkzeuges bleibt, mit dem die Schraube festdrehbar ist.

Das schalenförmige Druckstück selbst entspricht in seiner Kontur und seinem Krümmungsradius, wenn die Haltestange als Rundstange ausgebildet ist, der Kontur der Innenkammer der Haltestange, wobei die Dicke des Druckstückes aus Platzgründen ebenfalls gering gehalten sein kann.

Nach einer vorteilhaften Weiterbildung der Erfindung ist vorgesehen, dass das Druckstück auf seiner der Innenwandung der Haltestange abgewandten Seite eine Schraubenkopfaufnahme aufweist, beispielsweise eine Senkung, in der der Kopf einer Schraube einliegt, wenn diese beispielsweise einen Senkkopf aufweist.

Neben den genannten Fertigungsvorteilen, die zu einer Reduzierung der Herstellungskosten führen, ist die in jedem Fall einteilige Ausbildung des Anschlusssockels erwähnenswert. Hierdurch ist eine unterbrechungsfreie Oberfläche geschaffen, die einen hochwertigen Gesamteindruck des Halters vermittelt und insofern gegenüber dem Stand der Technik ebenfalls eine Verbesserung darstellt.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: einen erfindungsgemäßen Halter in einer Seitenansicht,
- Figur 2: einen Teilschnitt durch den Halter in einer Draufsicht,
- Figur 3: ein weiteres Ausführungsbeispiel des Halters in einem Teilausschnitt in einer geschnittenen Seitenansicht,
- Figur 4: den Halter gemäß Figur 3 in einer geschnittenen Draufsicht.

In den Figuren ist ein Halter mit einer zumindest teilweise hohlen Haltestange 1 dargestellt, die ein Griffstück bildet und an der zwei parallel und mit Abstand zueinander angeordnete Anschlusssockel 2 befestigt sind.

In den vorliegenden Ausführungsbeispielen sind die Haltestangen 1 rohrförmig ausgebildet. Die Anschlusssockel 2 liegen seitlich an der Mantelfläche der jeweiligen Haltestange 1 an, wozu die anliegende Stirnseite entsprechend der Umfangskontur der Haltestange 1, in diesem Fall rund, angepasst ist.

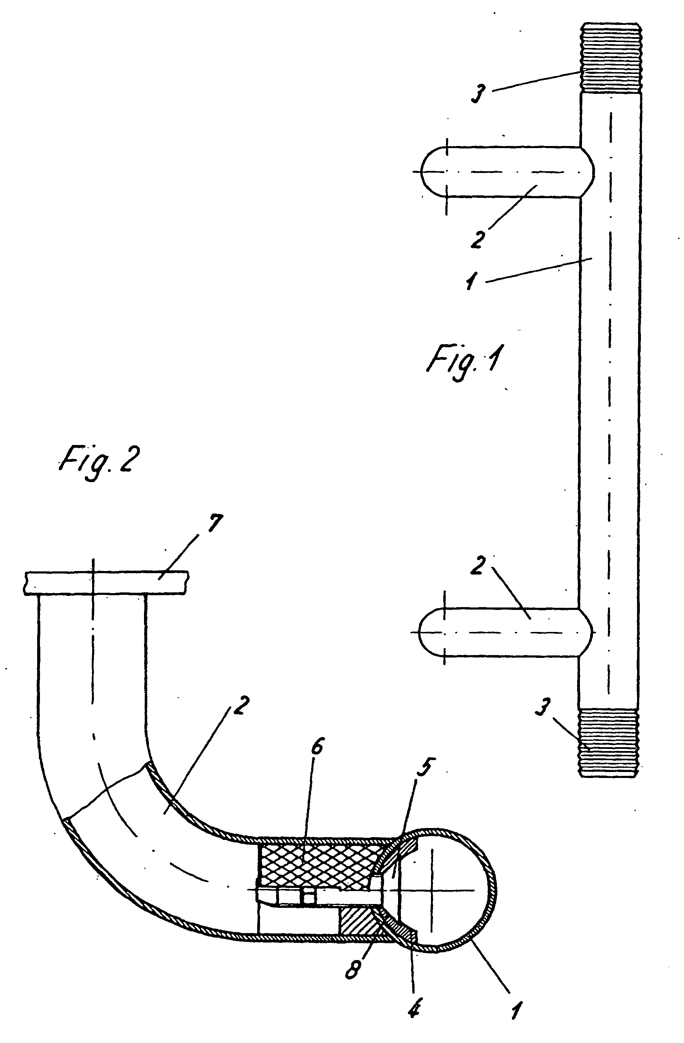

Mittels der Anschlusssockel 2 kann der Halter an einem Bauteil 7 (Figur 2) befestigt werden in an sich bekannter Art und Weise.

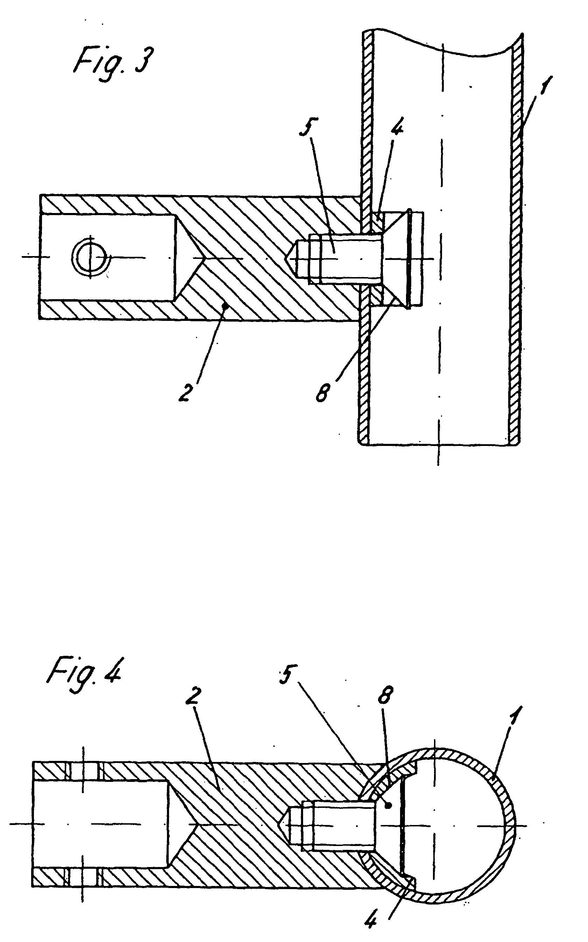

Während bei denen in Figuren 1 und 2 gezeigten Ausführungsbeispielen die Anschlusssockel 2 als Krümmer ausgebildet und aus einem Rohr hergestellt sind, sind die Anschlusssockel 2 gemäß den Figuren 3 und 4 aus einem runden Vollmaterial gebildet.

Zur Verbindung der Anschlusssockel 2 mit der Haltestange 1 sind Druckstücke 4 in Form von Formscheiben vorgesehen, die an der Innenwandung der Haltestange 1 anliegen und in ihrer Kontur der Krümmung der runden Haltestange 1 angepasst sind.

Durch jedes Druckstück 4 sowie die sich daran anschließende Wandung der Haltestange 1 ist eine Schraube 5 geführt, die sich mit ihrem Kopf, im vorliegenden Beispiel einem Senkkopf, an der konkaven Fläche des Druckstückes 4 abstützt.

Zur Anlage des Kopfes ist im Druckstück 4 eine Schraubenkopfaufnahme 8, in diesem Fall eine Senkung, vorgesehen.

Bei den in den Figuren 1 und 2 aus jeweils einem Rohr hergestellten Anschlusssockeln 2 ist zur Verbindung mit der Haltestange 1 endseitig ein Dübel 6 eingesteckt, in dem unter Aufspreizung die Schraube 5 eingedreht ist.

Durch ein geeignetes Werkzeug, das in die Haltestange 1 einführbar ist, ist die Schraube 5 entsprechend zu drehen. In ähnlicher Weise kann auch eine Verbindung der Anschlusssockel 2 mit dem Bauteil 7 erfolgen.

Wie weiter in der Figur 1 zu erkennen ist, sind die Enden der Haltestange 1 durch Stopfen 3 verschlossen, die beispielsweise mit der Haltestange 1 im übrigen verschraubt sein können.

Die Schrauben 5 sind zur Verbindung der Anschlusssockel 2 gemäß den Figuren 3 und 4 in Gewindebohrungen der Anschlusssockel 2 eingedreht, die stirnseitig eingebracht sind.

Diese Ausführungsform der Anschlusssockel 2 bietet sich dann an, wenn diese zylinderförmig, also gerade ausgebildet sind.

Das Druckstück 4 ist in seinem Abmaß so gehalten, dass es einerseits ausreichend Platz zur Aufnahme des Kopfes der Schraube 5 bietet, und andererseits geringstmöglichen Raum einnimmt, um einen ungehinderten Zugang eines Werkzeuges zu ermöglichen.

## Patentansprüche

1. Halter mit einer zumindest teilweise hohlen Haltestange (1) und mindestens einem damit verbundenen, sich an der Mantelfläche der Haltestange (1) abstützenden Anschlusssockel (2) zur Befestigung des Halters an einem Bauteil (7), **dadurch gekennzeichnet, dass** an der Innenwandung der Haltestange (1) ein schalenförmiges Druckstück (4) anliegt, an dem sich der Kopf einer Schraube (5) abstützt, die das Druckstück (4) und die Wandung der Haltestange (1) durchtritt und in den Anschlusssockel (2) oder Teilen davon unter Verspannung gegen die Haltestange (1) eingeschraubt ist.

2. Halter nach Anspruch 1, **dadurch gekennzeichnet, dass** das Druckstück (4) als Formscheibe ausgebildet ist.

3. Halter nach Anspruch 1, **dadurch gekennzeichnet, dass** das Druckstück (4) in seiner Außenkrümmung der Innenkrümmung der Haltestange (1) entspricht.

4. Halter nach Anspruch 1, **dadurch gekennzeichnet, dass** das Druckstück (4) eine Schraubenkopfaufnahme (8) aufweist, in der der Kopf der Schraube (5) einliegt.

5. Halter nach Anspruch 1, **dadurch gekennzeichnet, dass** das Druckstück (4) als Kreisringsegment ausgebildet ist.

6. Halter nach Anspruch 1, **dadurch gekennzeichnet, dass** die Schraube (5) als Senkkopfschraube ausgebildet ist.

## Claims

1. Holder having an at least partly hollow holding rod (1) and at least one connection socket (2) which is connected thereto, is supported on the lateral surface of the holding rod (1) and is intended for fastening the holder to a component (7), **characterized in that** a shell-shaped pressure piece (4) bears against the inner wall of the holding rod (1), the head of a screw (5) being supported on this pressure piece (4), the screw (5) passing through the pressure piece (4) and the wall of the holding rod (1) and being screwed into the connection socket (2) or parts thereof while being restrained against the holding rod (1).

2. Holder according to Claim 1, **characterized in that** the pressure piece (4) is designed as a shaped disc.

3. Holder according to Claim 1, **characterized in that** the pressure piece (4) corresponds in its outer curvature to the inner curvature of the holding rod (1).

4. Holder according to Claim 1, **characterized in that** the pressure piece (4) has a screw-head receptacle (8) in which the head of the screw (5) rests.

5. Holder according to Claim 1, **characterized in that** the pressure piece (4) is designed as a circular ring segment.

6. Holder according to Claim 1, **characterized in that** the screw (5) is designed as a countersunk head screw.

## Revendications

1. Support comportant une tige de maintien (1) au moins partiellement creuse et au moins un socle de raccordement (2) relié à elle, s'appuyant sur l'enveloppe de la tige de maintien (1) afin de fixer le support sur un élément de structure (7), **caractérisé en ce que** sur la paroi intérieure de la tige de maintien (1) s'appuie un élément d'appui (4) en forme de cuvette, sur lequel s'appuie la tête d'une vis (5) qui traverse l'élément d'appui (4) et la paroi de la tige de maintien (1) et est vissée dans le socle de raccordement (2) ou dans des parties de celui-ci, en étant serrée contre la tige de maintien (1).

2. Support selon la revendication 1, **caractérisé en ce que** l'élément d'appui (4) est conformé en disque profilé.

3. Support selon la revendication 1, **caractérisé en ce que** l'élément d'appui (4), par sa courbure extérieure, correspond à la courbure intérieure de la tige de maintien (1).

4. Support selon la revendication 1, **caractérisé en ce que** l'élément d'appui (4) présente un logement (8) pour tête de vis, dans lequel est engagée la tête de la vis (5).

5. Support selon la revendication 1, **caractérisé en ce que** l'élément d'appui (4) est conformé en segment de couronne circulaire.

6. Support selon la revendication 1, **caractérisé en ce que** la vis (5) est conformée en vis à tête conique.
